(19) Europäisches Patentamt
European Patent Office
Office européen des brevets

(11) EP 1 232 191 B1

(12) **EUROPÄISCHE PATENTSCHRIFT**

(45) Veröffentlichungstag und Bekanntmachung des Hinweises auf die Patenterteilung:
**01.12.2004 Patentblatt 2004/49**

(21) Anmeldenummer: **00960665.8**

(22) Anmeldetag: **15.09.2000**

(51) Int Cl.[7]: **C08F 8/00**, A61L 15/00

(86) Internationale Anmeldenummer:
**PCT/EP2000/009019**

(87) Internationale Veröffentlichungsnummer:
**WO 2001/025290 (12.04.2001 Gazette 2001/15)**

(54) **MECHANISCH STABILE HYDROGEL-FORMENDE POLYMERE**

MECHANICALLY STABLE HYDROGEL-FORMING POLYMERS

POLYMERES STABLES MECANIQUEMENT FORMANT DES HYDROGELS

(84) Benannte Vertragsstaaten:
**AT BE CH CY DE DK ES FI FR GB GR IE IT LI LU MC NL PT SE**

(30) Priorität: **04.10.1999 US 411644**

(43) Veröffentlichungstag der Anmeldung:
**21.08.2002 Patentblatt 2002/34**

(73) Patentinhaber: **BASF AKTIENGESELLSCHAFT**
**67056 Ludwigshafen (DE)**

(72) Erfinder:
- **ENGELHARDT, Friedrich**
  **60386 Frankfurt (DE)**
- **FRENZ, Volker**
  **55246 Mainz-Kostheim (DE)**
- **HERFERT, Norbert**
  **63674 Altenstadt (DE)**
- **RIEGEL, Ulrich**
  **60386 Frankfurt (DE)**
- **WEISMANTEL, Matthias**
  **63637 Jossgrund (DE)**
- **HEIDE, Wilfried**
  **67251 Freinsheim (DE)**

(56) Entgegenhaltungen:
**EP-A- 0 450 922**
**EP-A- 0 509 708**
**EP-A- 0 610 013**
**WO-A-93/05080**
**WO-A-95/27739**
**WO-A-98/06364**
**WO-A-99/34841**
**US-A- 4 056 502**
**US-A- 5 599 335**

- **DATABASE WPI Section Ch, Week 8522 Derwent Publications Ltd., London, GB; Class A14, AN 1980-70361C XP002156254 & JP 55 108407 A (NIPPON SHOKUBAI KAGAKU KOGYO CO., LTD.), 20. August 1980 (1980-08-20)**
- **DATABASE WPI Section Ch, Week 8837 Derwent Publications Ltd., London, GB; Class A14, AN 1982-53209E XP002156255 & JP 57 080403 A (TOA GOSEI CHEM. IND. LTD.), 20. Mai 1982 (1982-05-20)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 232 191 B1

Printed by Jouve, 75001 PARIS (FR)

## Beschreibung

Die vorliegende Erfindung betrifft hydrogel-formende Polymere mit verbesserter mechanischer Stabilität, die eine AUL 0,7 psi von mindestens 20 g/g, eine Saline Flow Conductivity von mindestens 40 x $10^{-7}$ $cm^3s/g$ und einen Frangibility-Index von mindestens 60 % aufweisen, deren Herstellung sowie die Verwendung dieser Polymere zur Aufnahme von wäßrigen Flüssigkeiten, insbesondere von Körperflüssigkeiten in Hygieneartikeln für Erwachsene und Babys.

Die hydrogel-formende Polymere zeichnen sich durch ein hohes Aufnahmevermögen für Wasser und wäßrige Lösungen aus und finden daher als superabsorbierende Polymere bevorzugt Anwendung als Absorptionsmittel in Hygieneartikeln.

Der zunehmenden Tendenz, Hygieneartikel wie Baby- und Inkontinenz-Windel immer kleiner und dünner gestalten, kann bei Beibehaltung der Gesamtabsorptionskapazität nur dadurch entsprochen werden, daß man den großvolumigen Fluffanteil reduziert und den Anteil an hochquellfähigem Hydrogel erhöht. Hierdurch müssen die superabsorbierenden Polymere zusätzliche Aufgaben bezüglich Flüssigkeitsaufnahme, -transport und -verteilung übernehmen, die vorher der Fluff erfüllt, um eine Leckage des Hygieneartikels aufgrund von Gel-blocking-Phänomenen zu verhindern.

Beispiele für Hygieneartikel mit einem höheren Anteil an hochquellfähigem Hydrogel lehren die US-A-5 149 335, EP-A-532 002, EP-A-615 736, EP-A-761 191 und US-A-5 562 646. Die Produkte weisen jedoch unbefriedigende Eigenschaften hinsichtlich des Flüssigkeitstransportes in gequollenem Zustand auf.

Die US-A-5 599 335 und US-A-5 669 894 beschreiben eine absorbierende Zusammensetzung, die mindestens eine Region mit einem superabsorbierendem Polymer in einer Konzentration von 60 - 100 Gew.-% enthält, wobei das superabsorbierende Polymer einen Saline Flow Conductivity-Wert von mindestens 30 x $10^{-7}$ $cm^3sec/g$ und eine Performance Under Pressure unter einer Druckbelastung von 0,7 psi (4826,5 Pa) von mindestens 23 g/g aufweist.

Für Hygieneartikel mit hohem Hydrogelanteil werden Hydrogele gefordert, die ein gutes Absorptionsvermögen unter Druckbelastung sowie eine ausreichende Permeabilität in gequollenen Gelzustand aufweisen. Diese Eigenschaften weisen in der Regel stark vernetzte hydrogel-formende Polymere auf.

Durch die starke Vernetzung werden die hydrogel-formenden Polymere jedoch sehr spröde, so daß sie im ungequollenen Zustand unter Einwirkung von mechanischen Kräften, wie sie beispielsweise bei pneumatischen Förderung auftreten z.B. bei der Herstellung des Hygieneartikels, leicht abgerieben oder sogar zerbrochen werden können. Durch den durch mechanische Belastung bedingten Abrieb entstehen zum einen Staubanteile, zum anderen ist eine Verschlechterung der physikalisch-chemischen Produkteigenschaften zu verzeichnen. Feinstaub einer Korngröße kleiner 10 µm ist aus inhalationstoxischen Gründen unerwünscht, Feinstaubanteile kleiner 100 µm verursachen das visuell sichtbare Stauben mit all seinen Folgeerscheinungen und führen zu Handlingsproblemen im Produktions- und Verarbeitungsbetrieb und sind daher ebenfalls unerwünscht. Der erhöhte Feinkornanteil bewirkt auch eine Verschlechterung der Absorptions- und Flüssigkeitsweiterleitungseigenschaften, da die aufgequollenen Feinkornpartikel die Poren in der absorbierenden Struktur verstopfen. Im Falle von oberflächennachvernetzten hydrogel-formenden Polymeren wird darüber hinaus durch den mechanischen Abrieb die höher vernetzte Schale der Polymerpartikel zerstört, der niedrig vernetzte Kern kommt an die Oberfläche, so daß diese Partikel in der absorbierenden Struktur Gel-blocking zeigen.

Es gibt verschiedene Ansätze die stark vernetzten Polymere durch eine zusätzliche Beschichtung gegenüber mechanischen Belastungen zu stabilisieren.

So werden in der EP-A-703 265 hydrophile, hochquellfähige Hydrogele beschrieben, die mit nicht reaktiven, wasserunlöslichen filmbildenden Polymeren beschichtet sind und so eine verbesserte Abriebfestigkeit aufweisen. Als bevorzugte filmbildende Polymere werden Homo- oder Copolymerisate von Vinylestern sowie Homo- oder Copolymerisate von Acryl- oder Methacrylsäureestern eingesetzt.

Die EP 755 964 lehrt die Beschichtung der Hydrogele mit nicht reaktiven, wasserunlöslichen Wachsen für eine verbesserte Abriebfestigkeit. Als bevorzugte Wachse werden Montanwachse und Polyethylenwachse oder Oxidate von Polyethylenwachsen eingesetzt.

Der Nachteil beider Beschichtungen ist eine Hydrophobierung der Teilchenoberfläche, die zu einer Verschlechterung der Flüssigkeitsweiterleitung im Hygieneartikel führt.

In der WO 94/22940 wird die Beschichtung von hydrogel-formenden Polymeren mit Polyetherpolyolen zur Entstaubung und Erhöhung der Abriebfestigkeit beschrieben. In Kontakt mit wäßrigen Flüssigkeiten kann diese Beschichtung jedoch abgelöst werden und erhöht dann die Viskosität der zu absorbierenden Flüssigkeit, was eine Verschlechterung der Flüssigkeitsaufnahme der absorbierenden Zusammensetzung zur Folge hat.

In der EP-A-690 077 ist die Polymerisation von Ether- und Hydroxylgruppen-haltigen Comonomeren wie zum Beispiel Polyethylenglykol(meth)acrylaten oder Polypropylenglykol(meth)-acrylaten zur Verbesserung der Abriebfestigkeit beschrieben. Um den gewünschten Effekt zu erzielen, müssen jedoch relativ große Anteile an diesen Copolymeren eingesetzt werden, die selber keinen Beitrag zur osmotischen Quellkraft der Hydrogele leisten und daher bezogen auf das Gewicht eine Verschlechterung der Quellkapazität bewirken.

Der vorliegenden Erfindung lagen daher hydrogel-formende Polymere als Aufgabe zugrunde, die eine hohe mechanische Stabilität, ein hohes Absorptionsvermögen unter Druckbelastung und eine hohe Permeabilität im gequollenen Zustand besitzen, ohne die obengenannten Nachteile aufzuweisen.

Demgemäß wurde gefunden, daß hydrogel-formende Polymere, mit einer AUL 0,7 psi (4826,5 Pa) von mindestens 20 g/g, einer Saline Flow Conductivity von mindestens 40 x $10^{-7}$ $cm^3s/g$ und einem Frangibility-Index von mindestens 60 % diese Forderung erfüllen. Die vorliegende Erfindung betrifft weiterhin ein Verfahren zur Herstellung solcher hydrogel-formender Polymere sowie deren Verwendung zur Absorption von wäßrigen Flüssigkeiten, insbesondere von Körperflüssigkeiten in Hygieneartikel für Erwachsene und Babys.

Die erfindungsgemäßen Polymere sind erhältlich, indem man ein hydrogel-formendes Polymer mit einer Saline Flow Conductivity (SFC) von mindestens 40 x $10^{-7}$ $cm^3s/g$ und einer AUL 0,7 psi (4826,5 Pa) von mindestens 20 g/g auf einen Restfeuchtigkeitsgehalt von mindestens 3 Gew.-%, bevorzugt 4 Gew.-% und insbesonders 5 Gew.-% bezogen auf das hydrogel-formende Polymer einstellt.

Unter Restfeuchtigkeitsgehalt ist die Feuchtigkeitsmenge zu verstehen, die während 3 h bei 105°C verdampft. Bevorzugt handelt es sich bei dem Restfeuchtigkeitsgehalt um Wasser. Der Zusatz geringer Mengen bis zu 20 Gew.-% eines wassermischbaren organischen Lösungsmittels im Gemisch mit Wasser ist möglich, hat jedoch in der Regel keinen verbesserten Effekt gegenüber reinem Wasser.

Polymere mit einer SFC ≥40 x $10^{-7}$ $cm^{-3}s/g$ und einer AUL 0,7 psi ≥20 g/g sind allgemein bekannt und beispielsweise in der US-A-5 599 335 und US-A-5 669 894 beschrieben. Bei diesen Polymeren handelt es sich um oberflächennachvernetzte Hydrogele. Die Oberflächennachvernetzung bedingt den hohen Vernetzungsgrad des Polymers und damit die eingangs geschilderten Probleme.

Die Grundpolymere, welche anschließend oberflächennachvernetzt werden, sind vernetzte Polymere mit Säuregruppen, die überwiegend in Form ihrer Salze, in der Regel Alkali- oder Ammoniumsalzen vorliegen. Derartige Polymere quellen bei Kontakt mit wässrigen Flüssigkeiten zu Gelen auf.

Derartige Grundpolymere sind beispielsweise Pfropf(co)polymere von einem oder mehreren hydrophilen Monomeren auf eine geeignete Pfropfgrundlage, vernetzte, Säuregruppen-tragende Cellulose- oder Stärkeether und -ester, vernetzte Carboxymethylcellulose, oder in wäßrigen Flüssigkeiten quellbare Naturprodukte mit Säuregruppen, wie beispielsweise Alginate und Carrageenane.

Geeignete Pfropfgrundlagen können natürlichen oder synthetischen Ursprungs sein. Beispiele sind Stärke, Cellulose oder Cellulosederivate sowie andere Polysaccharide und Oligosaccharide, Polyvinylalkohol, Polyalkylenoxide, insbesondere Polyethylenoxide und Polypropylenoxide, Polyamine, Polyamide sowie hydrophile Polyester. Geeignete Polyalkylenoxide haben beispielsweise die Formel

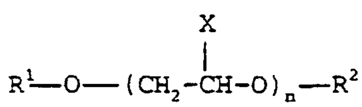

worin

| | |
|---|---|
| $R^1$ und $R^2$ | unabhängig voneinander Wasserstoff, Alkyl, Alkenyl oder Acryl, |
| X | Wasserstoff oder Methyl und |
| n | eine ganze Zahl von 1 bis 10000 bedeuten. |
| $R^1$ und $R^2$ | bedeuten bevorzugt Wasserstoff, $(C_1-C_4)$-Alkyl, $(C_2-C_6)$-Alkenyl oder Phenyl. |

Bevorzugt sind Polymere, die durch vernetzende Polymerisation oder Copolymerisation von Säurengruppen tragenden monoethylenisch ungesättigten Monomeren oder deren salzen erhalten werden. Ferner ist es möglich, diese Monomere ohne Vernetzer zu (co)polymerisieren und nachträglich zu vernetzen.

Solche Säuregruppen tragenden Monomere sind beispielsweise mono-ethylenisch ungesättigte $C_3$- bis $C_{25}$-Carbonsäuren oder Anhydride wie Acrylsäure, Methacrylsäure, Ethacrylsäure, α-Chloracrylsäure, Crotonsäure, Maleinsäure, Maleinsäureanhydrid, Itaconsäure, Citraconsäure, Mesaconsäure, Glutaconsäure, Aconitsäure und Fumarsäure. Weiterhin kommen monoethylenisch ungesättigte Sulfon- oder Phosphonsäuren in Betracht, beispielsweise Vinylsulfonsäure, Allylsulfonsäure, Sulfoethylacrylat, Sulfoethylmethacrylat, Sulfopropylacrylat, Sulfopropylmethacrylat, 2-Hydroxy-3-acryloxypropylsulfonsäure, 2-Hydroxy-3-methacryloxypropylsulfonsäure, Vinylphosphonsäure, Allylphosphonsäure, Styrolsulfonsäure und 2-Acrylamido-2-methylpropansulfonsäure. Die Monomeren können allein oder in Mischung untereinander eingesetzt werden.

Bevorzugt eingesetzte Monomere sind Acrylsäure, Methacrylsäure, Vinylsulfonsäure, Acrylamidopropansulfonsäure oder Mischungen dieser Säuren, z.B. Mischungen aus Acrylsäure und Methacrylsäure, Mischungen aus Acrylsäure und Acrylamidopropansulfonsäure oder Mischungen aus Acrylsäure und Vinylsulfonsäure.

Zur Optimierung von Eigenschaften kann es sinnvoll sein, zusätzliche monoethylenisch ungesättigte Verbindungen einzusetzen, die keine Säuregruppe tragen, aber mit den säuregruppentragenden Monomeren copolymerisierbar sind. Hierzu gehören beispielsweise die Amide und Nitrile von monoethylenisch ungesättigten Carbonsäuren, z.B. Acrylamid, Methacrylamid und N-Vinylformamid, N-Vinylacetamid, N-Methyl-N-vinylacetamid, Acrylnitril und Methacrylnitril. Weitere geeignete Verbindungen sind beispielsweise Vinylester von gesättigten $C_1$- bis $C_4$-Carbonsäuren wie Vinylformiat, Vinylacetat oder Vinylpropionat, Alkylvinylether mit mindestens 2 C-Atomen in der Alkylgruppe, wie z.B. Ethylvinylether oder Butylvinylether, Ester von monoethylenisch ungesättigten $C_3$- bis $C_6$-Carbonsäuren, z.B. Ester aus einwertigen $C_1$- bis $C_{18}$-Alkoholen und Acrylsäure, Methacrylsäure oder Maleinsäure, Halbester von Maleinsäure, z.B. Maleinsäuremonomethylester, N-Vinyllactame wie N-Vinylpyrrolidon oder N-Vinylcaprolactam, Acrylsäure- und Methacrylsäureester von alkoxylierten einwertigen, gesättigten Alkoholen, z.B. von Alkoholen mit 10 bis 25 C-Atomen, die mit 2 bis 200 Mol Ethylenoxid und/oder Propylenoxid pro Mol Alkohol umgesetzt worden sind, sowie Monoacrylsäureester und Monomethacrylsäureester von Polyethylenglykol oder Polypropylenglykol, wobei die Molmassen ($M_n$) der Polyalkylenglykole beispielsweise bis zu 2000 betragen können. Weiterhin geeignete Monomere sind Styrol und alkylsubstituierte Styrole wie Ethylstyrol oder tert.-Butylstyrol.

Diese keine Säuregruppen tragenden Monomere können auch in Mischung mit anderen Monomeren eingesetzt werden, z.B. Mischungen aus Vinylacetat und 2-Hydroxyethylacrylat in beliebigem Verhältnis. Diese keine Säuregruppen tragenden Monomere werden der Reaktionsmischung in Mengen zwischen 0 und 50 Gew.-%, vorzugsweise kleiner 20 Gew.-% zugesetzt.

Bevorzugt werden vernetzte Polymere aus Säuregruppen tragenden monoethylenisch ungesättigten Monomeren, die gegebenenfalls vor oder nach der Polymerisation in ihre Alkali- oder Ammoniumsalze überführt werden, und aus 0 - 50 Gew.-% bezogen auf ihr Gesamtgewicht keine Säuregruppen tragenden monoethylenisch ungesättigten Monomeren.

Bevorzugt werden vernetzte Polymere aus monoethylenisch ungesättigten $C_3$-$C_{12}$-Carbonsäuren und/oder deren Alkali- oder Ammoniumsalzen. Insbesondere werden vernetzte Polyacrylsäuren bevorzugt, deren Säuregruppen zu 25 - 100 % als Alkali- oder Ammoniumsalze vorliegen.

Als Vernetzer können Verbindungen fungieren, die mindestens 2 ethylenisch ungesättigte Doppelbindungen aufweisen. Beispiele für Verbindungen dieses Typs sind N,N'-Methylen-bisacrylamid, Polyethylenglykoldiacrylate und Polyethylenglykoldimethacrylate, die sich jeweils von Polyethylenglykolen eines Molekulargewichts von 106 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Butandioldimethacrylat, Hexandioldiacrylat, Hexandioldimethacrylat, Allylmethacrylat, Diacrylate und Dimethacrylate von Blockcopolymerisaten aus Ethylenoxid und Propylenoxid, zweifach bzw. mehrfach mit Acrylsäure oder Methacrylsäure veresterte mehrwertige Alkohole, wie Glycerin oder Pentaerythrit, Triallylamin, Dialkyldiallylammoniumhalogenide wie Dimethyldiallylammoniumchlorid und Diethyldiallylammoniumchlorid, Tetraallylethylendiamin, Divinylbenzol, Diallylphthalat, Polyethylenglykoldivinylether von Polyethylenglykolen eines Molekulargewichts von 106 bis 4000, Trimethylolpropandiallylether, Butandioldivinylether, Pentaerythrittriallylether, Umsetzungsprodukte von 1 Mol Ethylenglykoldiglycidylether oder Polyethylenglykoldiglycidylether mit 2 Mol Pentaerythritoltriallylether oder Allylalkohol, und/oder Divinylethylenharnstoff. Vorzugsweise setzt man wasserlösliche Vernetzer ein, z.B. N,N'-Methylenbisacrylamid, Polyethylenglykoldiacrylate und Polyethylenglykoldimethacrylate, die sich von Additionsprodukten von 2 bis 400 Mol Ethylenoxid an 1 Mol eines Diols oder Polyols ableiten, Vinylether von Additionsprodukten von 2 bis 400 Mol Ethylenoxid an 1 Mol eines Diols oder Polyols, Ethylenglykoldiacrylat, Ethylenglykoldimethacrylat oder Triacrylate und Trimethacrylate von Additionsprodukten von 6 bis 20 Mol Ethylenoxid an 1 Mol Glycerin, und/oder Divinylharnstoff.

Als Vernetzer kommen außerdem Verbindungen in Betracht, die mindestens eine polymerisierbare ethylenisch ungesättigte Gruppe und mindestens eine weitere funktionelle Gruppe enthalten. Die funktionelle Gruppe dieser Vernetzer muß in der Lage sein, mit den funktionellen Gruppen, im wesentlichen den Säuregruppen der Monomeren, zu reagieren. Geeignete funktionelle Gruppen sind beispielsweise Hydroxyl-, Amino-, Epoxi- und Aziridinogruppen. Verwendung finden können z.B. Hydroxyalkylester der oben genannten monoethylenisch ungesättigten Carbonsäuren, z.B. 2-Hydroxyethylacrylat, Hydroxypropylacrylat, Hydroxybutylacrylat, Hydroxyethylmethacrylat, Hydroxypropylmethacrylat und Hydroxybutylmethacrylat, Allylpiperidiniumbromid, N-Vinylimidazole wie z.B. N-Vinylimidazol, 1-Vinyl-2-methylimidazol und N-Vinylimidazoline wie N-Vinylimidazolin, 1-Vinyl-2-methylimidazolin, 1-Vinyl-2-ethylimidazolin oder 1-Vinyl-2-propylimidazolin, die in Form der freien Basen, in quaternisierter Form oder als Salz bei der Polymerisation eingesetzt werden können. Außerdem eignen sich Dialkylaminoalkylacrylate und Dialkylaminoalkylmethacrylate wie Dimethylaminoethylacrylat, Dimethylaminoethylmethacrylat, Diethylaminoethylacrylat und Diethylaminoethylmethacrylat. Die basischen Ester werden vorzugsweise in quaternisierter Form oder als Salz eingesetzt. Weiterhin kann z.B. auch Glycidyl(meth)acrylat eingesetzt werden. Die Vernetzer sind in der Reaktionsmischung beispielsweise von 0,001 bis 20 und vorzugsweise von 0,01 bis 14 Gew.-% vorhanden.

Die Polymerisation wird wie allgemein üblich durch einen Initiator ausgelöst. Auch eine Initiierung der Polymerisation durch Einwirkung von Elektronenstrahlen auf die polymerisierbare, wäßrige Mischung ist möglich. Die Polymerisation kann allerdings auch in Abwesenheit von Initiatoren der obengenannten Art durch Einwirkung energiereicher Strahlung in Gegenwart von Photoinitiatoren ausgelöst werden. Als Polymerisationsinitiatoren können sämtliche unter den Polymerisationsbedingungen in Radikale zerfallende Verbindungen eingesetzt werden, z.B. Peroxide, Hydroperoxide, Wasserstoffperoxid, Persulfate, Azoverbindungen und die sogenannten Redoxkatalysatoren. Bevorzugt ist der Einsatz von wasserlöslichen Initiatoren. In manchen Fällen ist es vorteilhaft, Mischungen verschiedener Polymerisationsinitiatoren zu verwenden, z.B. Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperisobutyrat, tert.-Butyl-per-2-ethylhexanoat, tert.-Butylperisononanoat, tert.-Butylpermaleat, tert.-Butylperbenzoat, Di-(2-ethylhexyl)-peroxidicarbonat, Dicyclohexylperoxydicarbonat, Di-(4-tert.-butylcyclohexyl)peroxidicarbonat, Dimyristilperoxidicarbonat, Diacetylperoxydicarbonat, Allylperester, Cumylperoxyneodecanoat, tert.-Butylper-3,5,5-trimethylhexanoat, Acetylcyclohexylsulfonylperoxid, Dilaurylperoxid, Dibenzoylperoxid und tert.-Amylperneodekanoat. Besonders geeignete Polymerisationsinitiatoren sind wasserlösliche Azostarter, z.B. 2,2'-Azobis-(2-amidinopropan)-dihydrochlorid, 2,2'-Azobis-(N,N'-dimethylen)isobutyramidin-dihydrochlorid, 2-(Carbamoylazo)isobutyronitril, 2,2'-Azobis[2-(2'imidazolin-2-yl)propan]dihydrochlorid und 4,4'-Azobis-(4-cyanovaleriansäure). Die genannten Polymerisationsinitiatoren werden in üblichen Mengen eingesetzt, z.B. in Mengen von 0,01 bis 5, vorzugsweise 0,1 bis 2,0 Gew.-%, bezogen auf die zu polymerisierenden Monomeren.

Als Initiatoren kommen außerdem Redoxkatalysatoren in Betracht. Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetall-hydrogensulfit, -sulfit, -thiosulfat, -hyposulfit, -pyrosulfit oder -sulfid, Metallsalze, wie Eisen-II-ionen oder Natriumhydroxymethylsulfoxylat. Vorzugsweise verwendet man als reduzierende Komponente des Redoxkatalysators Ascorbinsäure oder Natriumsulfit. Bezogen auf die bei der Polymerisation eingesetzte Menge an Monomeren verwendet man beispielsweise $3 \cdot 10^{-6}$ bis 1 Mol-% der reduzierenden Komponente des Redoxkatalysatorsystems und 0,001 bis 5,0 Mol-% der oxidierenden Komponente des Redoxkatalysators.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte $\alpha$-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)maleinimid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclohexanon und 2,6-Bis-(p-azidobenzyliden)-4-methylcyclohexanon. Die Photoinitiatoren werden, falls sie eingesetzt werden, üblicherweise in Mengen von 0,01 bis 5 Gew.-%, bezogen auf die zu polymerisierenden Monomeren angewendet.

Ferner gibt es Vernetzer, die mindestens zwei gegenüber Säuregruppen reaktive Gruppen aufweisen. Diese Vernetzer können vor, während oder nach der radikalischen Polymerisation zugesetzt werden. Die Umsetzung kann bei Raumtemperatur oder auch bei erhöhten Temperaturen bis zu 200°C, abhängig von der Reaktivität des Vernetzers, erfolgen. Davon abhängig handelt es sich um eine nachträgliche Vernetzung von Polymeren, die durch die Polymerisation der obengenannten monoethylenisch ungesättigten Säuren und gegebenenfalls monoethylenisch ungesättigten Comonomere hergestellt wurden und die ein Molekulargewicht größer 5000, bevorzugt größer 50000 aufweisen, oder eine parallel zum Kettenwachstum stattfindende Vernetzung.

Die geeigneten funktionellen Gruppen wurden bereits oben genannt, d.h. Hydroxyl-, Amino-, Epoxi-, Isocyanat-, Ester-, Amido- und Aziridinogruppen. Beispiele für solche Vernetzer sind Ethylenglykol, Diethylenglykol, Triethylenglykol, Tetraethylenglykol, Polyethylenglykol, Glycerin, Polyglycerin, Propylenglykol, Polypropylenglykol, Blockcopolymerisate aus Ethylenoxid und Propylenoxid, Ethanolamin, Sorbitanfettsäureester, ethoxylierte Sorbitanfettsäureester, Trimethylolpropan, Pentaerythrit, 1,3-Butandiol, 1,4-Butandiol, Polyvinylalkohol, Sorbit, Polyglycidylether wie Ethylenglykoldiglycidylether, Polyethylenglykoldiglycidylether, Glycerindiglycidylether, Glycerinpolyglycidylether, Diglycerinpolyglycidylether, Polyglycerinpolyglycidylether, Sorbitpolyglycidylether, Pentaerythritpolyglycidylether, Propylenglykoldiglycidylether und Polypropylenglykoldiglycidylether, Polyaziridinverbindungen wie 2,2-Bishydroxymethylbutanol-tris[3-(1-aziridinyl)-propionat], 1,6-Hexamethylendiethylenharnstoff, Diphenylmethan-bis-4,4'-N,N'-diethylenharnstoff, Halogenepoxyverbindungen wie Epichlorhydrin und α-Methylepifluorhydrin, Polyisocyanate wie 2,4-Toluylendiisocyanat und Hexamethylendiisocyanat, Alkylencarbonate wie 1,3-Dioxolan-2-on und 4-Methyl-1,3-dioxolan-2-on, weiterhin Bisoxazoline und Oxazolidone, Polyamidoamine sowie deren Umsetzungsprodukte mit Epichlorhydrin, ferner polyquaternäre Amine wie Kondensationsprodukte von Dimethylamin mit Epichlorhydrin, Homo- und Copolymere von Diallyldimethylammoniumchlorid sowie Homo- und Copolymerisate von Dimethylaminoethyl(meth)acrylat, die gegebenenfalls mit beispielsweise Methylchlorid quaterniert sind.

Weitere geeignete Vernetzer sind polyvalente Metallionen, die in der Lage sind, ionische Vernetzungen auszubilden. Beispiele für solche Vernetzer sind Magnesium-, Calcium-, Barium- und Aluminiumionen. Diese Vernetzer werden beispielsweise als Hydroxyde, Carbonate oder Hydrogencarbonate der wäßrigen polymerisierbaren Lösung zugesetzt.

Weitere geeignete Vernetzer sind multifunktionelle Basen, die ebenfalls in der Lage sind, ionische Vernetzungen auszubilden, beispielsweise Polyamine oder deren quaternierte Salze. Beispiele für Polyamine sind Ethylendiamin, Diethylentriamin, Triethylentetramin, Tetraethylenpentamin, Pentaethylenhexamin und Polyethylenimine sowie Polyvinylamine mit Molmassen von jeweils bis zu 4 000 000.

Die Vernetzer werden den Säuregruppe tragenden Polymeren oder Salzen in Mengen von 0,1 bis 25 Gew.-% bevorzugt von 0,1 bis 15 Gew.-%, bezogen auf die Menge des eingesetzten Polymers zugesetzt.

Die vernetzten Polymere werden vorzugsweise neutralisiert eingesetzt. Die Neutralisation kann jedoch auch nur teilweise erfolgt sein. Der Neutralisationsgrad beträgt bevorzugt 25 bis 100 %, insbesondere 50 bis 100 %. Als Neutralisationsmittel können Alkalimetallbasen oder Ammoniak bzw. Amine eingesetzt werden. Vorzugsweise werden Natronlauge oder Kalilauge verwendet. Die Neutralisation kann jedoch auch mit Hilfe von Natriumcarbonat, Natriumhydrogencarbonat, Kaliumcarbonat oder Kaliumhydrogencarbonat oder anderen Carbonaten oder Hydrogencarbonaten vorgenommen werden. Darüberhinaus sind prim., sek. und tert. Amine einsetzbar.

Als technische Verfahren zur Herstellung dieser Produkte können alle Verfahren Anwendung finden, die üblicherweise bei der Herstellung von Superabsorbern eingesetzt werden, wie sie z.B. im Kapitel 3 in "Modern Superabsorbent Polymer Technology", F.L. Buchholz und A.T. Graham, Wiley-VCH, 1998 erläutert sind.

Bevorzugt ist die Polymerisation in wäßriger Lösung als sogenannte Gel-Polymerisation. Dabei werden 10 bis 70 gew.-%ige wäßrige Lösungen der Monomere und gegebenenfalls einer geeigneten Propfgrundlage in Gegenwart eines Radikalinitiators unter Ausnutzung des Trommsdorff-Norrish-Effektes polymerisiert.

Die Polymerisationsreaktion kann im Temperaturbereich zwischen 0 und 150°C, vorzugsweise zwischen 10 und 100°C, sowohl bei Normaldruck als auch unter erhöhtem oder erniedrigtem Druck durchgeführt werden. Wie üblich kann die Polymerisation auch in einer Schutzgasatmosphäre, vorzugsweise unter Stickstoff, ausgeführt werden.

Durch mehrstündiges Nachheizen der Polymerisatgele im Temperaturbereich 50 bis 130°C, vorzugsweise 70 bis 100°C, können die Qualitätseigenschaften der Polymerisate noch verbessert werden.

Die Oberflächennachvernetzung kann in an sich bekannter Weise mit getrockneten, gemahlenen und abgesiebten Polymerpartikeln geschehen.

Hierzu werden Verbindungen, die mit den funktionellen Gruppen der Polymere unter Vernetzung reagieren können, vorzugsweise in Form einer wasserhaltigen Lösung auf die Oberfläche der Hydrogel-Partikel aufgebracht. Die wasserhaltige Lösung kann wassermischbare organische Lösungsmittel enthalten. Geeignete Lösungsmittel sind Alkohole wie Methanol, Ethanol, i-Propanol oder Aceton.

Geeignete Oberflächennachvernetzungsmittel sind beispielsweise

- Di- oder Polyglycidylverbindungen wie Phosphonsäurediglycidylether oder Ethylenglykoldiglycidylether, Bischlorhydrinether von Polyalkylenglykolen,
- Alkoxysilylverbindungen,
- Polyaziridine, Aziridin-Einheiten enthaltende Verbindungen auf Basis von Polyethern oder substituierten Kohlenwasserstoffen, beispielsweise Bis-N-aziridinomethan,
- Polyamine oder Polyamidoamine sowie deren Umsetzungsprodukte mit Epichlorhydrin,
- Polyole wie Ethylenglykol, 1,2-Propandiol, 1,4-Butandiol, Glycerin, Methyltriglykol, Polyethylenglykole mit einem mittleren Molekulargewicht $M_w$ von 200-10000, Di- und Polyglycerin, Pentaerythrit, Sorbit, die Oxethylate dieser Polyole sowie deren Ester mit Carbonsäuren oder der Kohlensäure wie Ethylencarbonat oder Propylencarbonat,
- Kohlensäurederivate wie Harnstoff, Thioharnstoff, Guanidin, Dicyandiamid, 2-Oxazolidinon und dessen Derivate, Bisoxazolin, Polyoxazoline, Di- und Polyisocyanate,

- Di- und Poly-N-methylolverbindungen wie beispielsweise Methylenbis(N-methylolmethacrylamid) oder Melamin-Formaldehyd-Harze,

- Verbindungen mit zwei oder mehr blockierten Isocyanat-Gruppen wie beispielsweise Trimethylhexamethylendiisocyanat blockiert mit 2,2,3,6-Tetramethyl-piperidinon-4.

Bei Bedarf können saure Katalysatoren wie beispielsweise p-Toluolsulfonsäure, Phosphorsäure, Borsäure oder Ammoniumdihydrogenphosphat zugesetzt werden.

Besonders geeignete Oberflächennachvernetzungsmittel sind Polyole wie 1,2-Propandiol oder 1,4-Butandiol, und Kohlensäurederivate wie Ethylencarbonat oder 2-Oxazolidinon.

Das Aufbringen der Vernetzerlösung erfolgt bevorzugt durch Aufsprühen einer Lösung des Vernetzers in herkömmlichen Reaktionsmischern oder Misch- und Trocknungsanlagen. Nach Aufsprühen der Vernetzerlösung kann ein Temperaturbehandlungsschritt nachfolgen, bevorzugt in einem nachgeschalteten Trockner, bei einer Temperatur zwischen 80 und 230°C, bevorzugt 120 - 210°C, und besonders bevorzugt zwischen 160 und 190°C, über einen Zeitraum von 5 Minuten bis 6 Stunden, bevorzugt 10 Minuten bis 2 Stunden und besonders bevorzugt 10 Minuten bis 1 Stunde, wobei sowohl Spaltprodukte als auch Lösungsmittelanteile entfernt werden können. Die Trocknung kann aber auch im Mischer selbst erfolgen, durch Beheizung des Mantels oder Einblasen eines vorgewärmten Trägergases.

Bedingt durch den Temperaturbehandlungsschritt der Oberflächennachvernetzung werden hydrogel-formende Polymere mit sehr geringem Restfeuchtigkeitsgehalt erhalten, typischerweise beträgt der Restfeuchtigkeitsgehalt kleiner 1 Gew.-%, oft sogar kleiner 0,5 Gew.-%. Man nimmt an, daß der geringe Restfeuchtigkeitsgehalt die Sprödigkeit der hydrogel-formenden Polymere erhöht, so daß diese Produkte nur eine geringe mechanische Stabilität aufweisen.

Erfindungsgemäß steigert die Erhöhung des Restfeuchtigkeitsgehaltes auf mindestens 3 Gew.-%, bevorzugt mindestens 4 Gew.-% und mehr bevorzugt von mindestens 5 Gew.-% die mechanische Stabilität dieser Produkte beträchtlich.

Bei Verwendung von Oberflächennachvernetzungsmitteln mit einer höheren Reaktivität beispielsweise Ethylenglykoldiglycidylether und dessen Mischungen ist es möglich durch schonendere Temperaturen direkt bei Erreichen eines Restfeuchtigkeitsgehaltes von mindestens 3 Gew.-% die Umsetzung zu beenden.

Die bevorzugte Erhöhung der Restfeuchtigkeit erfolgt nach der Abreaktion des Oberflächennachvernetzungsmittels, d.h. nach dem Temperaturbehandlungsschritt. Bevorzugt erfolgt die Erhöhung der Restfeuchtigkeit durch Aufsprühen von Wasser in dem Trockner nachgeschalteten Kühl- oder Mischaggregaten. Besonders bevorzugt ist das Aufsprühen von Wasser in einem dem Oberflächennachvernetzungs-Trockner nachgeschalteten Kühler, so daß die Abkühlung des heißen Produktes und die Erhöhung der Restfeuchte in einem Schritt erfolgen kann. Die Temperatur des hydrogel-formenden Polymeren sollte bei dem Aufsprühen des Wassers maximal 100°C betragen, bevorzugt maximal 80°C und besonders bevorzugt maximal 60°C betragen. Optional können auch zwei oder mehrere hintereinander geschaltete Kühler verwendet werden, so daß zum Beispiel in dem ersten Kühler das heiße Produkt zunächst auf eine Temperatur unter 100°C heruntergekühlt wird und anschließend im zweiten Kühler das Aufsprühen von Wasser und eine weitere Absenkung der Produkttemperatur erfolgt.

Bei dem Aufsprühen von Wasser auf hydrogel-formende Polymerteilchen kann es leicht zu unerwünschten Agglomerationen kommen. In einer bevorzugten Ausführung der vorliegenden Erfindung wird daher eine wäßrige Tensidlösung oder -dispersion zur Erhöhung der Restfeuchtigkeit aufgesprüht. Geeignet sind hierbei alle nichtionischen, anionischen, kationischen oder amphoteren Tenside mit einem HLB-Wert größer gleich 3 (Definition des HLB-Wertes: siehe W.C. Griffin, J. Soc. Cosmetic Chem. 5 (1954) 249).

Geeignete nichtionische Tenside sind beispielsweise die Anlagerungsprodukte von Ethylenoxid, Propylenoxid oder Mischungen aus Ethylenoxid und Propylenoxid an Alkylphenole, aliphatische Alkohole, Carbonsäuren und Amine. Beispielsweise eignen sich mit Ethylenoxid und/oder Propylenoxid alkoxylierte $C_8$- bis $C_{12}$-Alkylphenole. Handelsübliche Produkte dieser Art sind beispielsweise Octylphenole bzw. Nonylphenole, die jeweils mit 4 bis 20 Mol Ethylenoxid pro Mol Phenol umgesetzt sind. Andere nichtionische Tenside sind ethoxylierte $C_{10}$- bis $C_{24}$-Fettalkohole oder ethoxylierte $C_{10}$- bis $C_{24}$-Fettsäuren sowie ethoxylierte $C_{10}$- bis $C_{24}$-Fettamine oder ethoxylierte $C_{10}$- bis $C_{24}$-Fettsäureamide. Außerdem eignen sich partiell mit $C_{10}$- bis $C_{24}$-Fettsäuren partiell veresterte mehrwertige $C_3$- bis $C_6$-Alkohole. Diese Ester können zusätzlich mit 2 bis 20 Mol Ethylenoxid umgesetzt sein. Als Fettalkohole, die zur Herstellung der Tenside alkoxylierte werden, eignen sich beispielsweise Palmitylalkohol, Stearylalkohol, Myristylalkohol, Laurylalkohol, Oxoalkohole sowie ungesättigte Alkohole, wie Oleylalkohol. Die Fettalkohole werden dabei zu einem solchen Grad ethoxyliert bzw. propoxyliert oder mit Ethylenoxid und Propylenoxid umgesetzt, daß die Reaktionsprodukte in Wasser löslich sind. Im allgemeinen setzt man 1 Mol der oben angegebenen Fettalkohole mit 2 bis 20 Mol Ethylenoxid und gegebenenfalls bis zu 5 Mol Propylenoxid so um, daß man Tenside erhält, die einen HLB-Wert von mehr als 8 haben.

$C_3$- bis $C_6$-Alkohole, die partiell verestert und gegebenenfalls ethoxyliert werden, sind beispielsweise Glycerin, Sorbit, Mannit und Pentaerythrit. Diese mehrwertigen Alkohole werden mit $C_{10}$- bis $C_{24}$-Fettsäure, z.B. Ölsäure, Stearinsäure oder Palmitinsäure, partiell verestert. Die Veresterung mit den Fettsäuren erfolgt dabei höchstens bis zu einem

solchen Grad, daß noch mindestens eine OH-Gruppe des mehrwertigen Alkohols unverestert bleibt. Geeignete Veresterungsprodukte sind beispielsweise Sorbitanmonooleat, Sorbitantristearat, Manitmonooleat, Glycerinmonooleat und Glycerindioleat. Die genannten Fettsäureester mehrwertiger Alkohole, die noch mindestens eine freie OH-Gruppe enthalten, können zur Modifizierung noch mit Ethylenoxid, Propylenoxid oder Mischungen aus Ethylenoxid und Propylenoxid umgesetzt werden. Pro Mol Fettsäureester verwendet man vorzugsweise 2 bis 20 Mol der genannten Alkylenoxide. Der Ethoxylierungsgrad hat bekanntlich einen Einfluß auf den HLB-Wert der nichtionischen Tenside. Durch geeignete Wahl der Alkoxylierungsmittel und der Menge an alkoxylierungsmittel kann man Tenside mit HLB-Werten in dem Bereich von 3 bis 20 in technisch einfacher Weise herstellen.

Eine weitere Gruppe geeigneter Substanzen sind Homopolymere des Ethylenoxids, Blockcopolymere von Ethylenoxid und Alkylenoxiden, vorzugsweise Propylenoxid sowie polyfunktionelle Blockcopolymere, die beispielsweise durch sequentielle Addition von Propylenoxid und Ethylenoxid an Diamine gebildet werden.

Desweiteren geeignet sind Alkylpolyglykoside, wie APG®, Glucopan® und Plantaren® der Fa. Henkel.

Die nichtionischen Tenside können entweder allein oder auch in Mischung miteinander verwendet werden.

Geeignete anionische Tenside sind $C_8$- bis $C_{24}$-Alkylsulfonate, die vorzugsweise in Form der Alkalisalze eingesetzt werden, $C_8$- bis $C_{24}$-Alkylsulfate, die vorzugsweise in Form der Alkali- oder Trialkanolammoniumsalze eingesetzt werden, wie z.B. Triethanolammoniumlaurylsulfat, Sulfonbernsteinsäurediester, z.B. das Natriumsalz von Sulfobernsteinsäuredi-(2-ethylhexyl)-ester, Sulfobernsteinsäurehalbester, wie beispielsweise Natriumlaurylsulfosuccinat oder Dinatriumfettalkoholpolyglykolethersulfosuccinat, $C_8$- bis $C_{24}$-Alkylarylsulfonsäuren sowie die Schwefelsäurehalbester von Anlagerungsprodukten von Ethylenoxid an Alkylphenole oder Fettalkohole.

Beispiele für geeignete kationische Tenside sind die Salze von Fettaminen, z.B. Kokosfettammoniumacetat, quarternäre Fettsäureaminoester, z.B. Difettsäureisopropylesterdimethyl-ammoniummethosulfat, quarternäre Fettsäureaminoamide, z.B. N-Undecylensäurepropylamido-N-trimethyl-ammoniummethosulfat, Anlagerungsprodukte von Alkylenoxiden an Fettamine bzw. Salze von Fettaminen, wie z.B. Pentaoxethylstearylammoniumacetat oder ethoxyliertes Methyloleinamin-Methosulfat sowie langkettige Alkylbenzyldimethylammoniumverbindungen, wie $C_{10}$- bis $C_{22}$-Alkylbenzyldimethylammaniumchlorid.

Beispiele für geeignete amphotere Tenside sind Verbindungen, die im gleichen Molekül mindestens ein quarternäres Ammoniumkation und mindestens ein Carboxylat- oder Sulfatanion tragen, wie beispielsweise Dimethylcarboxymethyl-Fettsäurealkylamidoammoniumbetaine oder 3-(3-Fettsäureamido-propyl)dimethylammonium-2-hydroxypropansulfonate.

Die ionischen Tenside können allein oder auch in Mischung miteinander verwendet werden.

Die Tenside werden in Mengen von 0,001 bis 2,0, vorzugsweise 0,01 bis 0,5 Gew.-%, bezogen auf hydrogelformendes Polymer, angewendet. Bevorzugt ist hierbei der Einsatz von nichtionischen oder anionischen Tensiden, besonders bevorzugt der Einsatz von nichtionischen Tensiden, wie die partiell mit ($C_{10}$-$C_{24}$)-Fettsäuren veresterten mehrwertigen ($C_3$-$C_6$)-Alkohole, die mit 2 - 20 Mol Ethylenoxid umgesetzt sind oder die zuvor genannten Veresterungsprodukte, die nicht mit Ethylenoxid umgesetzt sind.

In einer weiteren bevorzugten Ausführung der vorliegenden Erfindung wird dem aufzusprühenden Wasser zur Erhöhung des Restfeuchtegehaltes der hydrogel-formenden Polymerpartikel ein Ethanolamin der allgemeinen Formel (I) als Plastifizierhilfsmittel zugesetzt

$$(HOCH_2CH_2)_xNP_{(3-x)} \qquad (I),$$

in der

R Wasserstoff, Methyl oder $C_2$- bis $C_{20}$-Alkyl und
x eine Zahl 1, 2 oder 3 bedeuten.

Die Konzentration des Ethanolamins der Formel I beträgt hierbei 0,001 bis 20 Gew.-% bezogen auf hydrogelformendes Polymer, bevorzugt 0,01 bis 10 Gew.-%, und besonders bevorzugt 0,5 bis 5 Gew.-%. Ein besonders bevorzugtes Ethanolamin der Formel (I) ist Triethanolamin. Gegebenenfalls kann der wäßrigen Ethanolamin-Lösung noch ein Tensid zugesetzt werden, um eine zu starke Agglomeration der hydrogel-formenden Polymerpartikel beim Aufsprühen der Lösung zu verhindern. Hierfür geeignete Tenside sind bereits oben aufgeführt worden.

Die erfindungsgemäßen hydrogel-formenden Polymere zeigen eine verbesserte mechanische Stabilität, die durch den Frangibility-Index charakterisiert werden kann. So beträgt der Frangibility-Index für die erfindungsgemäßen hydrogel-formenden Polymere mindestens 60 %, bevorzugt mindestens 70 %, insbesondere mindestens 80 % und ganz besonders bevorzugt mindestens 90 %.

Die erfindungsgemäßen hydrogel-formenden Polymere weisen weiterhin eine hohe Absorptionskapazität unter Druckbelastung auf. so beträgt die AUL 0,7 psi (4826,5 Pa) mindestens 20 g/g, bevorzugt mindestens 22 g/g und besonders bevorzugt mindestens 24 g/g. Die erfindungsgemäßen hydrogel-formenden Polymere weisen darüber hinaus eine hohe Permeabilität im gequollenen Zustand auf. So beträgt die Saline Flow Conductivity mindestens 40 x $10^{-7}$ $cm^3s/g$, bevorzugt mindestens 50 x $10^{-7}$ $cm^3s/g$, insbesondere mindestens 60 x $10^{-7}$ $cm^3s/g$, und ganz besonders bevorzugt mindestens 80 x $10^{-7}$ $cm^3s/g$.

Weiterhin betrifft die vorliegende Erfindung Hygieneartikel, umfassend

(A) eine obere flüssigkeitsdurchlässige Abdeckung

(B) eine untere flüssigkeitsundurchlässige Schicht

(C) einen zwischen (A) und (B) befindlichen Kern, enthaltend

  (C1) 10 - 100 Gew.-% des erfindungsgemäßen hydrogel-formenden Polymers

  (C2) 0 - 90 Gew.-% hydrophiles Fasermaterial

(D) gegebenenfalls eine sich unmittelbar oberhalb und unterhalb des Kerns (C) befindende Tissueschicht und

(E) gegebenenfalls eine sich zwischen (A) und (C) befindende Aufnahmeschicht.

Unter Hygieneartikel sind dabei sowohl Inkontinenzeinlagen und Inkontinenzhosen für Erwachsene als auch Windeln für Babys zu verstehen.

Bei der flüssigkeitsdurchlässigen Abdeckung (A) handelt es sich um die Schicht, die direkten Hautkontakt hat. Das Material sind übliche synthetische und halbsynthetische Fasern oder Filme wie Polyester, Polyolefine, Rayon oder natürliche Fasern wie Baumwolle. Bei nichtgewebten Materialien, sind die Fasern in der Regel durch Bindemittel wie Polyacrylate verbunden. Bevorzugte Materialien sind Polyester, Rayon und deren Blends, Polyethylen und Polypropylen.

Die flüssigkeitsundurchlässige Schicht (B) besteht in der Regel aus einer Folie aus Polyethylen oder Polypropylen.

Der Kern (C) enthält neben dem erfindungsgemäßen hydrogel-formenden Polymer (C1) hydrophiles Fasermaterial (C2). Unter hydrophil ist zu verstehen, daß sich wässrige Flüssigkeiten schnell über die Faser verteilen. Für gewöhnlich ist das Fasermaterial Cellulose, modifizierte Cellulose, Rayon, Polyester wie Polyethylenterephthalat. Besonders bevorzugt werden Cellulosefasern wie Zellstoff. Die Fasern haben in der Regel einen Durchmesser von 1 - 200 µm, bevorzugt 10 - 10 µm. Darüberhinaus haben die Fasern eine Mindestlänge von 1 mm.

Der Anteil des hydrophilen Fasermaterials bezogen auf die Gesamtmenge des Kern beträgt bevorzugt 10 - 80 Gew.-%, besonders bevorzugt 40 - 70 Gew.-%.

Der Aufbau und die Form von Windeln ist allgemein bekannt und beispielsweise in der EP-A-0 316 518 und EP-A-0 202 127 beschrieben.

Die nachfolgenden Beispiele sollen die Erfindung näher erläutern.

Beschreibung der Testmethoden:

CRC (Centrifuge Retention Capacity):

Zu Bestimmung der CRC werden 0,2 g hydrogel-formendes Polymer (Kornfraktion 106 - 850 µm) in einem 60 x 85 mm großen Teebeutel eingewogen, der anschließend verschweißt wird. Der Teebeutel wird dann in einem Überschuß von 0,9 gew-%iger Kochsalzlösung gegeben (mindestens 0,83 l Kochsalz-Lösung / 1 g hydrogel-formendes Polymer). Nach 30 Minuten Quellzeit wird der Teebeutel aus der Kochsalz-Lösung genommen und bei 250 G drei Minuten zentrifugiert.
Durch Wägung des zentrifugierten Teebeutels wird die von dem hy-drogel-formenden Polymer festgehaltene Flüssigkeitsmenge ermittelt.
AUL 0,7 psi (4826,5 Pa)

Die Meßzelle zur Bestimmung der AUL 0,7 psi (4826,5 Pa) ist ein Plexiglas-Zylinder mit einem Innendurchmesser von 60 mm und einer Höhe von 50 mm, der an der Unterseite einen angeklebten Edelstahl-Siebboden mit einer Maschenweite von 36 µm besitzt. Zu der Meßzelle gehört weiterhin eine Plastikplatte mit einem Durchmesser von 59 mm und ein Gewicht, welches zusammen mit der Plastikplatte in die Meßzelle hineingestellt werden kann. Das Gewicht der Plastikplatte und des Gewichts beträgt zusammen 1345 g. Zur Durchführung der Bestimmung der AUL

0,7 psi (4826,5 Pa) wird das Gewicht des leeren Plexiglas-Zylinders und der Plastikplatte gemessen und als $W_o$ notiert. Dann werden 0,900 ± 0,005 g hydrogel-formendes Polymer (Korngrößenverteilung: 150 - 800 µm) in den Plexiglas-Zylinder eingewogen und möglichst gleichmäßig auf dem Edelstahl-Siebboden verteilt. Anschließend wird die Plexiglasplatte vorsichtig in den Plexiglaszylinder hineingelegt, die gesamte Einheit gewogen und das Gewicht als $W_a$ notiert. Nun wird das Gewicht auf die Plastikplatte in dem Plexiglas-Zylinder gestellt. In die Mitte einer Petrischale mit einem Durchmesser von 200 mm und einer Höhe von 30 mm wird eine keramische Filterplatte mit einem Durchmesser von 120 mm und der Porosität 0 gelegt und soviel 0,9 gew.-%ige Natriumchlorid-Lösung eingefüllt, daß die Flüssigkeitsoberfläche mit der Filterplattenoberfläche abschließt, ohne das die Oberfläche der Filterplatte benetzt wird. Anschließend wird ein rundes Filterpapier mit einem Durchmesser von 90 mm und einer Porengröße <20 µm (Schwarzband 589 von Schleicher & Schüll) auf die keramische Filterplatte gelegt. Der hydrogel-formendes Polymer enthaltende Plexiglaszylinder wird mit Plastikplatte und Gewicht nun auf das Filterpapier gestellt und dort für 60 Minuten belassen. Nach dieser Zeit wird die komplette Einheit aus der Petrischale vom Filterpapier herausgenommen und anschließend das Gewicht aus dem Plexiglaszylinder entfernt. Der gequollenes Hydrogel enthaltende Plexiglaszylinder wird zusammen mit der Plastikplatte ausgewogen und das Gewicht als $W_b$ notiert. Die AUL 0,7 psi (4826,5 Pa) berechnet sich gemäß:

$$\text{AUL 0,7 psi} = [W_b - W_a] / [W_a - W_o]$$

SFC (Saline Flow Conductivity):

Die Testmethode zur Bestimmung der SFC wird in der US-A-5 599 335 beschrieben.

Frangibility-Index:

Der Frangibility-Index stellt ein Maß zur Charakterisierung der mechanischen Stabilität der hydrogel-formenden Polymer-Partikel dar. Zur Durchführung des Tests werden in eine zylindrische Porzellanmühle mit einem Innendurchmesser von 7,2 cm, einer inneren Höhe von 8,8 cm und einem Fassungsvermögen von ca. 360 mL 20 g hydrogelformendes Polymer (gesamtes Kornspektrum) eingewogen. Es werden dann 127 g Porzellankörper (Abmessung: Durchmesser: 1,25 cm, Höhe: 1,25 cm, Gewicht: 5,3 g) hinzugegeben, die Mühle verschlossen und für 15 Minuten bei 150 Upm auf entsprechenden Walzenantrieb gerollt. Von dem hydrogel-formenden Polymer wird vor und nach dieser Behandlung die SFC bestimmt, so daß der Frangibility-Index wie folgt ermittelt werden kann:

$$\text{Frangibility-Index} = [\text{SFC}]_{\text{nach Kugelmühlentest}} \times 100\ \% / [\text{SFC}]_{\text{vor Kugelmühlentest}}$$

Restfeuchtigkeitsgehalt:

10,000 g ± 0,01 g hydrogel-formendes Polymer werden in eine dicht abdeckbare Schale mit einem Innendurchmesser von 50 - 90 mm und einer Randhöhe von 20 - 30 mm eingewogen und gleichmäßig verteilt, so daß die Oberflächenbeladung der Schale mit hydrogelformendem Polymer nicht mehr als 0,3 g/cm$^2$ beträgt. Das Gewicht der hydrogel-formendes Polymer enthaltenden Schale und das Gewicht des zur Abdeckung der Schale vorgesehenen Deckels werden als M1 notiert. Die Schale mit dem hydrogel-formenden Polymer und der Deckel werden dann getrennt voneinander in einen auf 105 °C ± 2 °C vorgeheizten Trockenofen gestellt und dort 3 Stunden lang belassen. Nach dieser Zeit wird die Schale mit dem Deckel verschlossen und 30 Minuten in einen Exsikkator gestellt, um auf Raumtemperatur abzukühlen. Die Schale wird dann aus dem Exsikkator herausgenommen und innerhalb von 2 Minuten gewogen, das Gewicht wird als M2 notiert. Der Restfeuchtigkeitsgehalt berechnet sich gemäß

$$\text{Restfeuchtigkeitsgehalt} = [(M1 - M2)/(M1 - M0)] \times 100\ \%$$

mit

M0 = Gewicht der leeren Schale und des Deckels; zur Bestimmung von MO werden Schale und Deckel im Trokkenschrank bei 105 °C getrocknet und anschließend im Exsikkator auf Raumtemperatur abgekühlt.

Es wird mindestens eine Doppelbestimmung durchgeführt, als Restfeuchtegehalt wird das arithmetische Mittel der Einzelmessungen angegeben.

Beispiel 1

a) In einem 40 l-Plastikeimer werden 6,9 kg reine Acrylsäure mit 23 kg entionisiertem Wasser verdünnt. Zu dieser Lösung fügt man 62 g Pentaerythritoltriallylether unter Rühren hinzu, und inertisiert den verschlossenen Eimer durch Durchleiten von Stickstoff. Die Polymerisation wird dann durch Zugabe von 0,4 g Wasserstoffperoxid, gelöst in 40 ml entionisiertem Wasser, und 0,2 g Ascorbinsäure, gelöst in 40 ml entionisiertem Wasser, gestartet. Nach Beendigung der Reaktion wird das Gel mechanisch zerkleinert, und mit soviel Natronlauge versetzt bis ein Neutralisierungsgrad von 75 mol% bezogen auf die eingesetzte Acrylsäure erreicht wird. Das neutralisierte Gel wird dann auf einem Walzentrockner getrocknet, mit einer Stiftmühle gemahlen, und schließlich bei 200 - 850 µm abgesiebt.

b) Das unter a) hergestellte Grundpolymer wurde in einem Lödige-Labormischer mit, bezogen auf Grundpolymer, 10,2 Gew.-% Vernetzer-Lösung, zusammengesetzt aus 49 Gewichtsanteilen Methanol, 49 Gewichtsanteilen entionisiertem Wasser und 2 Gewichtsanteilen 2-Oxazolidinon besprüht. Anschließend wurde das feuchte Produkt in einen zweiten vorgeheizten Lödige-Labormischer überführt und bei 195°C für 60 Minuten getempert. Das getrocknete und auf Raumtemperatur abgekühlte Produkt wurde bei 850 µm abgesiebt.

c) Das nach b) erhaltene oberflächennachvernetzte Polymer wurde nach dem Temperungsschritt in einen dritten Lödige Labormischer überführt und auf ca. 80°C abgekühlt. Bei ca. 75 - 80°C wurde das Polymer mit 4 Gew.-% entionisiertem Wasser, bezogen auf eingesetztes Polymer, besprüht und weiter auf Raumtemperatur abgekühlt. Die unerwünschten Grobanteile ≥850 µm wurden durch Sieben abgetrennt und der Frangibility-Index des Produktes bestimmt.

Beispiel 2

Oberflächenvernetztes Polymer gemäß Beispiel 1 b), wurde nach dem Temperungsschritt in einen dritten Lödige Labormischer überführt und auf ca. 60°C abgekühlt. Bei ca. 55-60°C wurde das Polymer mit 6 Gew.-% entionisiertem Wasser bezogen auf eingesetztes Polymer besprüht und weiter auf Raumtemperatur abgekühlt. Die Grobanteile ≥850 µm wurden durch Sieben abgetrennt.

Beispiel 3

Oberflächenmodifiziertes Polymer gemäß Beispiel 1b, wurde nach dem Temperungsschritt in einen dritten Lödige Labormischer überführt und auf ca. 60°C abgekühlt. Bei ca. 55-60°C wurde das Polymer mit 5,15 Gew.-% bezogen auf eingesetztes Polymer einer Lösung aus 96,4 Gewichtsteilen entionisiertem Wasser und 3,6 Gewichtsteilen Sorbitanmonococoat besprüht und weiter auf Raumtemperatur abgekühlt. Die Grobanteile ≥850 µm wurden durch Sieben abgetrennt.

Beispiel 4

Oberflächenmodifiziertes Polymer gemäß Beispiel 1b, wurde nach dem Temperungsschritt in einen dritten Lödige Labormischer überführt und auf ca. 60°C abgekühlt. Bei ca. 55-60°C wurde das Polymer mit 6,65 Gew.-% bezogen auf eingesetztes Polymer einer Lösung aus 60,1 Gewichtsteilen entionisiertem Wasser, 37,6 Gewichtsteilen Triethanolamin und 2,3 Gewichtsteilen Sorbitanmonococoat besprüht und weiter auf Raumtemperatur abgekühlt. Die Grobanteile ≥850 µm wurden durch Sieben abgetrennt.

Tabelle 1:

| Anwendungstechnische Daten der Polymere vor der mechanischen Beanspruchung in der Kugelmühle | | | | |
|---|---|---|---|---|
| Beispiel | Restfeuchte [Gew.-%] | SFC [$10^{-7}$ $cm^3s/g$] | AUL 0,7 psi [g/g] | CRC [g/g] |
| Beispiel 1a | 4,3 | - | 12,0 | 35,0 |
| Beispiel 1b | 0,3 | 71 | 25,8 | 25,9 |
| Beispiel 1c | 3,3 | 77 | 25,0 | 25,2 |
| Beispiel 2 | 5,2 | 86 | 23,6 | 24,3 |

Tabelle 1: (fortgesetzt)

| Anwendungstechnische Daten der Polymere vor der mechanischen Beanspruchung in der Kugelmühle | | | | |
|---|---|---|---|---|
| Beispiel | Restfeuchte [Gew.-%] | SFC [$10^{-7}$ $cm^3s/g$] | AUL 0,7 psi [g/g] | CRC [g/g] |
| Beispiel 3 | 4,4 | 84 | 24,0 | 25,2 |
| Beispiel 4 | 3,4 | 85 | 22,8 | 24,9 |

Tabelle 2:

| Anwendungstechnische Daten der Polymere nach der mechanischen Beanspruchung in der Kugelmühle (siehe Test zum Frangibility-Index) | | | | | |
|---|---|---|---|---|---|
| Beispiel | Frangibility-Index [%] | SFC [$10^{-7}$ $cm^3s/g$] | AAP 0,7 psi [g/g] | CRC [g/g] | Anteil >850 µm [Gew.-%] |
| Beispiel 1b | 39,4 | 28 | 21,9 | 25,5 | - |
| Beispiel 1c | 63,6 | 49 | 23,5 | 25,0 | 14,7 |
| Beispiel 2 | 77,9 | 67 | 23,4 | 24,1 | 21, 5 |
| Beispiel 3 | 82,1 | 69 | 23,7 | 25,1 | 3,1 |
| Beispiel 4 | 91,8 | 78 | 22,5 | 24,9 | 5,3 |

Die erfindungsgemäßen Polymere der Beispiele 1c, 2, 3 und 4 zeigen einen deutlich höheren Frangibility-Index als das nicht-erfindungsgemäße Polymer des Beispiels 1b.

## Patentansprüche

**1.** Hydrogel-formendes Polymer mit

(i) einer Saline Flow Conductivity (SFC) von mindestens 40 x $10^{-7}$ $cm^3s/g$

(ii) einer AUL 0,7 psi (4826,5 Pa) von mindestens 20 g/g

(iii) einem Frangibility-Index von mindestens 60 %.

**2.** Hydrogel-formendes Polymer nach Anspruch 1, **dadurch gekennzeichnet, daß** es eine Saline Flow Conductivity (SFC) von mindestens 50 x $10^{-7}$ $cm^3s/g$ besitzt.

**3.** Hydrogel-formendes Polymer nach Anspruch 1 oder 2, **dadurch gekennzeichnet, daß** es eine AUL 0,7 psi (4826,5 Pa) von mindestens 22 g/g besitzt.

**4.** Hydrogel-formendes Polymer nach einem oder mehreren der Ansprüche 1 bis 3, **dadurch gekennzeichnet, daß** es einen Frangibility-Index von mindestens 70 % besitzt.

**5.** Verfahren zur Herstellung von hydrogel-formenden Polymeren gemäß einem oder mehreren der Ansprüche 1 bis 4, **dadurch gekennzeichnet, daß** man das oberflächennachvernetzte Polymer auf einen Restfeuchtigkeitsgehalt von mindestens 3 Gew.-% einstellt.

**6.** Verfahren nach Anspruch 5, **dadurch gekennzeichnet, daß** die Zugabe von Wasser in einem dem Oberflächennachvernetzungs-Trockner nachgeschalteten Kühler erfolgt.

**7.** Verfahren nach Anspruch 5 oder 6, **dadurch gekennzeichnet, daß** dem zuzugebenden Wasser ein Tensid mit einem HLB-Wert ≥3 zugesetzt wird.

**8.** Verfahren nach den Ansprüchen 5 bis 7, **dadurch gekennzeichnet, daß** dem zuzugebenden Wasser ein Ethanolamin der allgemeinen Formel (I)

$$(HOCH_2CH_2)_xNR_{(3-x)} \quad (I),$$

in der

R Wasserstoff, Methyl oder $C_2$- bis $C_{20}$-Alkyl und
x eine Zahl 1, 2 oder 3 bedeuten,

als Plastifizierhilfsmittel zugesetzt wird.

**9.** Verwendung der hydrogel-formenden Polymere gemäß einem oder mehreren der Ansprüche 1 bis 4 in Hygieneartikeln.

**10.** Hygieneartikel umfassend

(a) eine obere flüssigkeitsdurchlässige Abdeckung

(B) eine untere flüssigkeitsundurchlässige Schicht

(C) einen zwischen (A) und (B) befindlichen Kern, enthaltend

(C1) 10 - 100 Gew.-% eines hydrogel-formenden Polymers gemäß einem oder mehreren der Ansprüche 1 bis 4.

(C2) 0 - 90 Gew.-% hydrophiles Fasermaterial

(D) gegebenenfalls eine sich unmittelbar oberhalb und unterhalb des Kerns (C) befindende Tissueschicht und

(E) gegebenenfalls eine sich zwischen (A) und (C) befindende Aufnahmeschicht.

## Claims

**1.** Hydrogel-forming polymer having

(i) a Saline Flow Conductivity (SFC) of at least 40 x $10^{-7}$ $cm^3s/g$

(ii) an AUL 0.7 psi (4826.5 Pa) of at least 20 g/g

(iii) a Frangibility Index of at least 60%.

**2.** Hydrogel-forming polymer as claimed in claim 1, possessing a Saline Flow Conductivity (SFC) of at least 50 x $10^{-7}$ $cm^3s/g$.

**3.** Hydrogel-forming polymer as claimed in claim 1 or 2, possessing an AUL 0.7 psi (4826.5 Pa) of at least 22 g/g.

**4.** Hydrogel-forming polymer as claimed in one or more of claims 1 to 3, possessing a Frangibility Index of at least 70%.

**5.** A process for producing hydrogel-forming polymers as set forth in one or more of claims 1 to 4, which comprises adjusting the surface-postcrosslinked polymer to a residual moisture content of at least 3% by weight.

**6.** A process as claimed in claim 5, wherein the addition of water takes place in a cooler downstream of the surface postcrosslinking dryer.

**7.** A process as claimed in claim 5 or 6, wherein a surfactant having an HLB value $\geq 3$ is added to the water to be added.

**8.** A process as claimed in any of claims 5 to 7, wherein the water to be added has added to it an ethanolamine of the general formula (I)

$$(HOCH_2CH_2)_xNR_{(3-x)} \quad (I),$$

where

R is hydrogen, methyl or $C_2$-$C_{20}$-alkyl, and
x is 1, 2 or 3,

as plasticizing aid.

**9.** The use of the hydrogel-forming polymers of one or more of claims 1 to 4 in hygiene articles.

**10.** A hygiene article comprising

(A) a fluid-pervious topsheet

(B) a fluid-impervious backsheet

(C) a core positioned between (A) and (B) and comprising

(C1) 10 - 100% by weight of a hydrogel-forming polymer as claimed in one or more of claims 1 to 4

(C2)0 - 90% by weight of hydrophilic fiber material

(D) optionally a tissue layer positioned directly above and below said core (C) and

(E) optionally an acquisition layer positioned between (A) and (C).

## Revendications

**1.** Polymère formant un hydrogel, ayant

(i) une SFC (Saline Flow Conductivity) d'au moins 40 x $10^{-7}$ $cm^3s/g$
(ii) une AUL 0,7 psi (4826,5 Pa) d'au moins 20 g/g
(iii) un indice de frangibilité d'au moins 60%.

**2.** Polymère formant un hydrogel selon la revendication 1, **caractérisé en ce qu'**il possède une SFC (Saline Flow Conductivity) d'au moins 50 x $10^{-7}$ $cm^3s/g$.

**3.** Polymère formant un hydrogel selon la revendication 1 ou 2, **caractérisé en ce qu'**il possède une AUL 0,7 psi (4826,5 Pa) d'au moins 22 g/g.

**4.** Polymère formant un hydrogel selon une ou plusieurs des revendications 1 à 3, **caractérisé en ce qu'**il possède un indice de frangibilité d'au moins 70%.

**5.** Procédé de préparation de polymère formant un hydrogel selon une ou plusieurs des revendications 1 à 4, **caractérisé en ce que** le polymère réticulé en surface est ajusté à une teneur en humidité résiduelle d'au moins 3% en poids.

**6.** Procédé selon la revendication 5, **caractérisé en ce que** l'addition d'eau est effectuée dans un refroidisseur en aval du sécheur de postréticulation de surface.

**7.** Procédé selon la revendication 5 ou 6, **caractérisé en ce que** l'eau à ajouter est additionnée d'un tensioactif d'une

valeur HLB ≥ 3.

**8.** Procédé selon les revendications 5 à 7, **caractérisé en ce que** l'eau à ajouter est additionnée d'une éthanolamine de formule générale (I)

$$(HOCH_2CH_2)_xNR_{(3-x)} \quad (I),$$

dans laquelle

R représente de l'hydrogène ou un radical méthyle ou alkyle en $C_2$ à $C_{20}$ et
x représente un nombre d'une valeur de 1, 2 ou 3,

en tant qu'adjuvant de plastification.

**9.** Utilisation du polymère formant un hydrogel selon une ou plusieurs des revendications 1 à 4 dans des articles d'hygiène.

**10.** Articles d'hygiène comprenant

(a) un revêtement extérieur perméable aux liquides
(B) une couche intérieure non perméable aux liquides
(C) un noyau intermédiaire se trouvant entre (A) et (B), contenant

(C1) de 10 à 100% en poids d'un polymère formant un hydrogel selon une ou plusieurs des revendications 1 à 4,
(C2) de 0 à 90% en poids d'un matériau fibreux hydrophile,

(D) le cas échéant, une couche de non tissé se trouvant immédiatement au-dessus et au-dessous du noyau (C) et
(E) le cas échéant, une couche d'absorption se trouvant entre (A) et (C).